Europäisches Patentamt

European Patent Office

Office européen des brevets

(19)

(11) Veröffentlichungsnummer: **0 271 751 B1**

# EUROPÄISCHE PATENTSCHRIFT

(45) Veröffentlichungstag der Patentschrift: **24.07.91**

(51) Int. Cl.⁵: **B60B** 21/10, F16F 15/32

(21) Anmeldenummer: **87117521.2**

(22) Anmeldetag: **27.11.87**

(54) **Luftbereiftes Fahrzeugrad.**

(30) Priorität: **19.12.86 DE 3643453**

(43) Veröffentlichungstag der Anmeldung:
**22.06.88 Patentblatt 88/25**

(45) Bekanntmachung des Hinweises auf die
Patenterteilung:
**24.07.91 Patentblatt 91/30**

(84) Benannte Vertragsstaaten:
**AT BE CH DE ES FR GB GR IT LI LU NL SE**

(56) Entgegenhaltungen:
**EP-A- 0 177 773**
**DE-A- 3 237 544**

(73) Patentinhaber: **Continental AG**
**Königsworther Platz 1 Postfach 1 69**
**W-3000 Hannover 1(DE)**

(72) Erfinder: **Flebbe, Werner**
**Albert-Schweitzer-Strasse 52**
**W-3057 Neustadt a. Rbg. 1(DE)**
Erfinder: **Bethge, Michael**
**Marienbaderstrasse 3**
**W-3000 Hannover 71(DE)**

## Beschreibung

Die Erfindung betrifft ein luftbereiftes Fahrzeugrad mit einer starren Felge, die im wesentlichen sich nach radial innen erstreckende Felgenhörner aufweist, und mit einem Fahrzeugluftreifen, der mit seinen Wülsten auf der radial inneren Seite der Felge neben den Felgenhörnern befestigt ist, weiterhin mit zumindest einem einteiligen Abdeckring, der den Raum axial innen vom Reifenwulst ausfüllt, und der mehrere umlaufende Hohlkammern aufweist, wobei eine Hohlkammer, die dem einen Reifenwulst benachbart ist, zur Aufnahme eines Ausgleichsgewichts dient und hierzu die dem Reifenwulst zugewandte Außenwand des Abdeckrings zumindest im Bereich des Ausgleichsgewichts eine Schlitzöffnung aufweist.

In dem Dokument DE-A-36 34 678 (veröffentlicht am 14.4.88) wird eine verbesserte Art des Auswuchtens beschrieben, indem bei einem Fahrzeugrad der in Rede stehenden Art ein Ausgleichsgewicht durch eine Schlitzöffnung hindurch in eine Hohlkammer eines Abdeckrings eingeführt wird. Nach dem Einbringen des Ausgleichsgewichts wird der vorher nach radial innen gezogene Teil des Abdeckrings wieder nach radial außen gedrückt, so daß sich die Schlitzöffnung verschließt.

Der vorliegenden Erfindung liegt die Aufgabe zugrunde, das in der DE-A-3 634 678*0 beschriebene Fahrzeugrad in der Weise weiterzuentwickeln, daß die Schließwirkung im Bereich derSchlitzöffnung in allen Betriebssituationen, insbesondere auch nach einer Alterung des Abdeckringgummis bzw. -kunststoffs, erhalten bleibt.

Diese Aufgabe wird erfindungsgemäß dadurch gelöst, daß sich radial innen von der Schlitzöffnung am Abdeckring und/oder am Reifenwulst Rastmittel befinden, die ein ungewolltes Heraustreten des Abdeckringsteils mit dem Ausgleichsgewicht verhindern.

Gemäß einer bevorzugten Ausführungsform dienen als Rastmittel eine umlaufende Rippe am Abdeckring und eine der Rippe angepaßte Nut am Reifenwulst. Nach der Montage eines Ausgleichsgewichts läßt sich die Rippe auf einfachste Weise in die Nut hineindrükken, wodurch der radial innere Teil des Abdeckrings gegen ein Öffnen der Schlitzöffnung gesichert ist und weiterhin ein tiefes Eindringen von Schmutz und Wasser in den Schlitz zwischen Reifenwulst und Abdeckring verhindert wird. Weitere vorteilhafte Ausgestaltungen sind den Unteransprüchen zu entnehmen.

Nachfolgend wird ein Ausführungsbeispiel der Erfindung anhand einer Zeichnung näher erläutert. Es zeigt:

Fig. 1 ein Fahrzeugrad mit einem Abdeckring mit einer umlaufenden Rippe, der in radialer Richtung Hohlkammern in drei Ebenen aufweist, und mit einem montierten Ausgleichsgewicht in einem radialen Teilschnitt,

Fig. 2 ein Fahrzeugrad mit einem Abdeckring mit einer umlaufenden Rippe, der in radialer Richtung Hohlkammern in zwei Ebenen aufweist, mit einem montierten Ausgleichsgewicht, in einem radialen Teilschnitt.

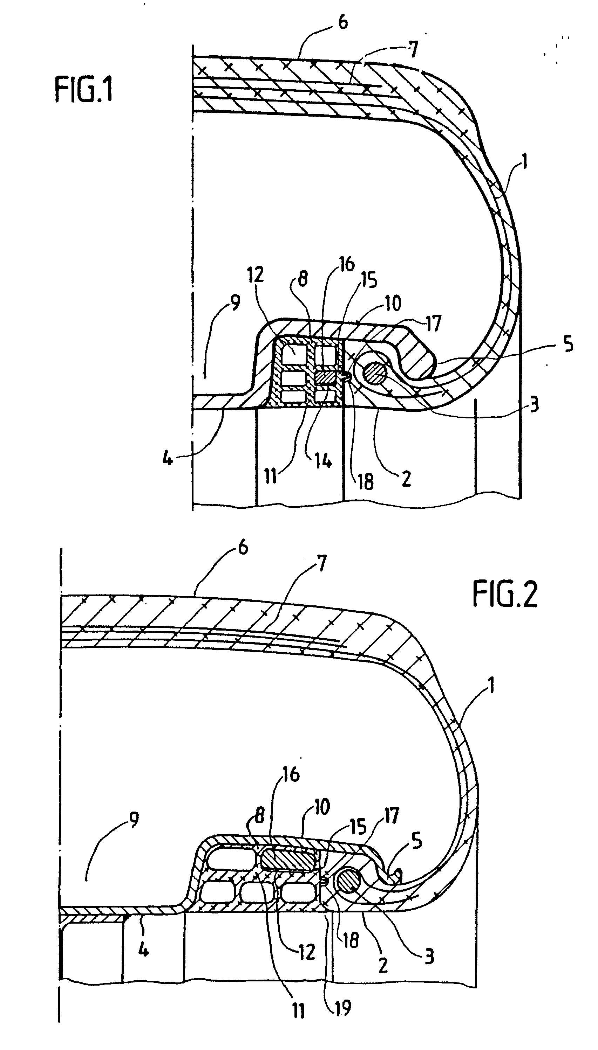

Beim Fahrzeugrad der Figur 1 ist ein im wesentlichen aus Gummi oder gummiähnlichen Kunststoffen bestehender Fahrzeugluftreifen, dessen Karkasse 1 in den Wülsten 2 durch Umschlingen von zugund druckfesten Wulstkernen 3 verankert ist, mit seinen Wülsten 2 am radial inneren Umfang einer Felge 4 neben sich im wesentlichen nach radial innen erstreckenden Felgenhörnern 5 befestigt. Zwischen dem Laufstreifen 56 und der Karkasse 1 befindet sich ein üblicher Verstärkungsgürtel 7. Axial innen vom Reifenwulst 2 befindet sich ein Montagehochbett 8, um den Reifen auf eine einteilige Felge montieren zu können. Radial außen weist die bevorzugt metallische Felge 4 ein Tiefbett 9 und zu beiden Seiten davon Pannenlaufstützflächen 10 auf.

Um ein Eindringen von Schmutz- oder Spritzwasser in den Raum neben dem Reifenwulst 2 zu verhindern, wird dieser Raum von einem einteiligen Abdeckring 11 aus Gummi oder Kunststoff ausgefüllt. Die Querschnittskontur des Abdeckrings 11 wird bevorzugt nach der Methode der finiten Elemente ermittelt und kann gemäß den Beispielen des Gebrauchsmusters Nr. G 86 07 101.7 gewählt werden. Das Beispiel der Figur 1 zeigt einen Abdeckring 11, bei dem die Hohlkammern 12 in radialer Richtung in drei Ebenen angeordnet sind und bei dem sich in jeder Ebene zwei Hohlkammern 12 nebeneinander befinden. Die in radialer Richtung mittlere und in axialer Richtung seitlich äußere Hohlkammer 14 weist in der seitlich äußeren Kammerwand eine Schlitzöffnung 15 auf. In der Hohlkammer 14 ist ein Ausgleichsgewicht 16, das zum Beispiel aus Blei bestehen kann, und das einen bevorzugt rechteckigen Querschnitt aufweist, durch Klemmung an den seitlichen Kammerwänden und/oder durch Klebung an der radial äußeren Kammerwand befestigt. In Umfangsrichtung ist das Ausgleichsgewicht 16 leicht gewölbt, so daß es sich dem Krümmungsverlauf der radial äußeren Kammerwände anpaßt.

Unmittelbar radial innen von der Schlitzöffnung 15 befindet sich am Abdeckring 11 eine umlaufende Rippe 17, die in eine Nut 18 des Reifenwulstes 2 einrastet. Der Querschnitt der Rippe 17 und der Nut 18 kann an sich beliebig gewählt sein, solange nur eine zuverlässige Verriegelung des radial inneren Teiles des Abdeckrings 11 gewährleistet ist.

Gegebenenfalls kann die Rippe 17 mit einem geringfügigen Flächendruck an den Wänden der Nut 18 anliegen, um auch im Falle des Alterns der Materialien keine Zwischenräume entstehen zu lassen.

Das Fahrzeugrad der Figur 2 gleicht im wesentlichen dem der Figur 1. Es unterscheidet sich jedoch durch breitere Pannenlaufstützflächen 10 und ein flacheres Tiefbett 9, so daß zur Verschließung des Einbauraumes mit dem Montagehochbett 8 ein flacherer, jedoch breiterer Abdeckring 11 erforderlich ist. Deshalb wurde in diesem Beispiel ein Abdeckring 11 gewählt, bei dem die Hohlkammern 12 in radialer Richtung in nur zwei Ebenen vorliegen. Die radial und axial äußere Hohlkammer 12 dient zur Aufnahme eines Ausgleichsgewichts 16, das über eine Schlitzöffnung 15 einführbar ist. Auf der radial inneren Seite kann der Abdeckring 11 zur Erhöhung der Dichtwirkung mit einer zusätzlichen Nase 19 versehen sein. Die übrigen Überlegungen gelten entsprechend dem vorstehend beschriebenen Beispiel.

Radial innen von der Schlitzöffnung 15 befindet sich mit Abstand zu ihr am Abdeckring 11 wiederum eine umlaufende Rippe 17, die in eine Nut 18 des Reifenwulstes 2 eingreift.

Bei den vorstehenden Beispielen wird das Fahrzeugrad in der Weise ausgewuchtet, daß nach der Reifenmontage zunächst der Abdeckring montiert wird, daß danach auf einer üblichen Prüfmaschine eine Unwucht ermittelt und markiert wird, daß dann durch ein Herausziehen des radial inneren Teils des Abdeckrings 11 eine Schlitzöffnung 15 aufgeweitet wird, wobei die Rippe 17 die Nut 18 verläßt, und daß anschließend ein Ausgleichsgewicht 16 eingeführt und durch Klemmung und/oder Klebung befestigt wird und daß schließlich die Schlitzöffnung 15 durch Eindrücken des radial inneren Teils des Abdeckrings 11 nach radial außen verschlossen wird, wobei gleichzeitig die Rippe 17 in die Nut 18 springt und dabei eine Verriegelung erzeugt.

Statt der vorstehend beschriebenen umlaufenden Nut 18 können auch solche Rippen und Nuten eingesetzt werden, die Umfangsrichtung nur abschnittsweise vorgesehen sind. Weiterhin sind Variationen denkbar, bei denen sich zumindest eine Rippe am Reifenwulst 2 und die zugehörige Nut am Abdeckring 11 befindet. Schließlich können die Rastmittel in Form eines Bajonettverschlusses ausgebildet sein.

Die Nut 18 in den Beispielen der Figuren 1 und 2 kann gemäß einer Weiterbildung der Erfindung zusätzlich dazu dienen, bei der Vulkanisation des Reifens den Wulstkern 3 zu zentrieren, so daß die Toleranzen hinsichtlich der Rundlaufeigenschaften nochmals reduziert werden.

## Patentansprüche

1. Luftbereiftes Fahrzeugrad mit einer starren Felge (4), die im wesentlichen sich nach radial innen erstreckende Felgenhörner (5) aufweist, und mit einem Fahrzeugluftreifen, der mit seinen Wülsten (2) auf der radial inneren Seite der Felge (4) neben den Felgenhörnern (5) befestigt ist, weiterhin mit zumindest einem einteiligen Abdeckring (11), der den Raum axial innen vom Reifenwulst (2) ausfüllt und der mehrere umlaufende Hohlkammern (12) aufweist, wobei eine Hohlkammer (14), die dem einen Reifenwulst (2) benachbart ist, zur Aufnahme eines Ausgleichsgewichts (16) dient und hierzu die dem Reifenwulst (2) zugewandte Außenwand des Abdeckrings (11) zumindest im Bereich des Ausgleichsgewichts (16) eine Schlitzöffnung (15) aufweist, dadurch gekennzeichnet, daß sich radial innen von der Schlitzöffnung (15) am Abdeckring (11) und/oder am Reifenwulst (2) Rastmittel (17, 18) befinden, die ein ungewolltes Heraustreten des Abdeckringteils mit dem Ausgleichsgewicht (16) verhindern.

2. Fahrzeugrad nach Anspruch 1, dadurch gekennzeichnet, daß als Rastmittel eine umlaufende Rippe (17) und eine umlaufende Nut (18) vorhanden sind, wobei zur Verriegelung die Nut (18) die Rippe (17) aufnimmt.

3. Fahrzeugrad nach Anspruch 1 und 2, dadurch gekennzeichnet, daß die Rippe (17) sich am Abdeckring (11) und die Nut (18) sich am Reifenwulst (2) befindet.

4. Fahrzeugrad nach Anspruch 1, dadurch gekennzeichnet, daß die Rastmittel von Rippen- und Nutabschnitten gebildet sind.

5. Fahrzeugrad nach Anspruch 1, dadurch gekennzeichnet, daß die Rastmittel in Form eines Bajonettverschlusses vorliegen.

6. Fahrzeugrad nach einem oder mehreren der vorstehenden Ansprüche, dadurch gekennzeichnet, daß nutartige Vertiefungen (18) am Reifenwulst (2) sich auf Höhe des Wulstkerns (3) befinden.

## Claims

1. Vehicle wheel fitted with a pneumatic tyre, comprising a rigid rim (4), which has substantially radially inwardly extending rim flanges (6), and comprising a pneumatic vehicle tyre, which is mounted by its beads (2) on the radially inner surface of the rim (4) adjacent the rim flanges (5), and also comprising at least one one-piece cover ring (11), which fills the space axially internally of the tyre bead (2) and which has a plurality of circumferential hollow chambers (12), a hollow chamber (14) being adjacent to one tyre bead (2) and serving to absorb a compensating weight (16) and, for this purpose, the external wall of the cover ring (11), facing the tyre bead (2), has one slot (15) in at least the region of the compensating weight (16), characterised in that locking means (17, 18) are situated radially internally of the slot (15) on the cover ring (11) and/or on the tyre bead (2) and prevent the cover ring component from accidentally emerging with the compensating weight (16).

2. Vehicle wheel according to claim 1, characterised in that a circumferential rib (17) and a circumferential groove (18) are provided as locking means, the groove (18) accommodating the rib (17) for locking purposes.

3. Vehicle wheel according to claims 1 and 2, characterised in that the rib (17) is situated on the cover ring (11), and the groove (18) is situated on the tyre bead (2).

4. Vehicle wheel according to claim 1, characterised in that the locking means are formed by rib and groove portions.

5. Vehicle wheel according to claim 1, characterised in that the locking means are in the form of a bayonet-type locking member.

6. Vehicle wheel according to one or more of the preceding claims, characterised in that groove-like recesses (18) are provided in the tyre bead (2) on a level with the bead core (3).

**Revendications**

1. Roue de véhicule équipée d'un pneumatique, avec une jante rigide (4) qui présente des rebords de jante (5) s'étendant, dans une direction radiale, essentiellement vers l'intérieur, avec un pneumatique qui est fixé par ses talons (2) à côté des rebords de jante (5) sur le côté radialement intérieur de la jante (4), et avec au moins une bague de recouvrement en une pièce (11) qui remplit l'espace situé axialement à l'intérieur du talon (2), et qui présente plusieurs cavités (12) agencées circonférentiellement, une cavité (14), voisine d'un des talons (2) du pneumatique, servant à recevoir un poids d'équilibrage (16), et la paroi extérieure de la bague de recouvrement (11) qui est tournée vers le talon (2) présentant à cet effet une ouverture en forme de fente (15) au moins dans la région du poids d'équilibrage (16), caractérisée en ce que des moyens de crantage (17,18), sont prévus radialement à l'intérieur de l'ouverture en forme de fente (15) sur la bague de recouvrement (11) et/ou sur le talon (2) du pneumatique, moyens qui empêchent la sortie involontaire de la bague de recouvrement munie du poids d'équilibrage (16).

2. Roue de véhicule selon la revendication 1, caractérisée en ce qu'une nervure annulaire (17) et une rainure annulaire (18) sont présentes comme moyens de crantage, la rainure (18) recevant la nervure (17) pour réaliser le verrouillage.

3. Roue de véhicule selon la revendication 1 ou 2, caractérisée en ce que la nervure (17) se trouve sur la bague de recouvrement (11), et la rainure (18) sur le talon (2) du pneumatique.

4. Roue de véhicule selon la revendication 1, caractérisée en ce que les moyens de crantage sont formés par des parties nervurées et des parties rainurées.

5. Roue de véhicule selon la revendication 1, caractérisée en ce que les moyens de crantage sont réalisés sous la forme d'un assemblage à baïonnette.

6. Roue de véhicule selon l'une ou plusieurs des revendications précédentes, caractérisée en ce que des renfoncements du genre rainures (18) se trouvent sur le talon de pneumatique (2), à hauteur de la tringle de talon (3).

FIG.1

FIG.2